# EUROPEAN PATENT APPLICATION

(11) **EP 4 155 095 A1**
(43) Date of publication of application: **29.03.2023**
(21) Application number: 21811783.6
(22) Date of filing: 27.01.2021
(51) Int. Cl.: B60C 1/00, B60C 13/00, C08L 21/00, C08L 53/02, C08L 75/04, B60C 5/01

(54) **TIRE**

(30) Priority: 29.05.2020 JP 2020094950
(71) Applicant: Sumitomo Rubber Industries, Ltd., Kobe-shi, Hyogo 651-0072 (JP)
(72) Inventor: MORITA, Koki, Kobe-shi, Hyogo 651-0072 (JP)
(74) Representative: Manitz Finsterwald Patent- und Rechtsanwaltspartnerschaft mbB
(86) International application number: PCT/JP2021/002854
(87) International publication number: WO 2021/240881

(57) **Abstract**

The present invention provides a tire having excellent durability during high speed running. A tire including a sidewall portion including a thermoplastic elastomer composition having a specific heat capacity of 1.7 J/(g-K) or less, the tire having a depression with a depth of 0.2 to 3.0 mm and/or a projection with a height of 0.2 to 3.0 mm between the tread ground contact edge and the tire maximum width position of the sidewall portion.

## Description

### TECHNICAL FIELD

The present invention relates to a tire.

### BACKGROUND ART

Tires including components containing thermoplastic elastomers have been proposed to increase the recyclability of tires. However, since thermoplastic elastomers do not have chemical bonds between the molecular chains as in vulcanized rubber materials, they become flowable due to self-heating during running, resulting in a non-uniform shape. Thus, these techniques are considered to have a problem with durability, especially during high speed running.

### SUMMARY OF INVENTION

### TECHNICAL PROBLEM

The present invention aims to solve the above problem and provide a tire having excellent durability during high speed running.

### SOLUTION TO PROBLEM

The present invention relates to a tire, including a sidewall portion including a thermoplastic elastomer composition having a specific heat capacity of 1.7 J/(g-K) or less, the tire having at least one of a depression with a depth of 0.2 to 3.0 mm or a projection with a height of 0.2 to 3.0 mm between a tread ground contact edge and a tire maximum width position of the sidewall portion.

Preferably, the thermoplastic elastomer composition contains at least one thermoplastic polyurethane elastomer.

Preferably, the thermoplastic elastomer composition contains at least one thermoplastic elastomer having a weight average molecular weight of 50,000 to 200,000.

Preferably, the thermoplastic elastomer composition contains at least one styrene-containing polymer.

Preferably, the thermoplastic elastomer composition has a styrene-containing polymer content of 1 to 20 parts by mass per 100 parts by mass of elastomer components.

Preferably, the depth or height is 0.3 to 2.0 mm.

Preferably, the thermoplastic elastomer composition has a specific heat capacity of 1.2 J/(g·K) or less.

Preferably, the thermoplastic polyurethane elastomer includes at least one selected from the group consisting of thermoplastic polyester polyurethane elastomers and thermoplastic polyether polyurethane elastomers.

Preferably, the thermoplastic elastomer composition has a filler content of 5 to 150 parts by mass per 100 parts by mass of elastomer components.

Preferably, the thermoplastic elastomer composition has a carbon black content of 5 to 100 parts by mass per 100 parts by mass of elastomer components.

Preferably, the thermoplastic elastomer composition has a silica content of 5 to 100 parts by mass per 100 parts by mass of elastomer components.

Preferably, the thermoplastic elastomer composition has a styrene-containing polymer content of 0.1 to 30 parts by mass per 100 parts by mass of elastomer components.

Preferably, the styrene-containing polymer includes at least one selected from the group consisting of styrene-ethylene-butylene copolymers, styrene-butadiene-styrene copolymers, styrene-ethylene-butylene-styrene copolymers, styrene-isoprene-styrene copolymers, styrene-ethylene-propylene-styrene copolymers, styrene-isobutylene-styrene copolymers, styrene-butadiene-styrene-butadiene copolymers, and styrene-butadiene-styrene-butadiene-styrene copolymers.

Preferably, the styrene-containing polymer includes at least one styrene-ethylene-butylene-styrene copolymer.

Preferably, the tire has, on an external surface of the sidewall portion, a projection that has: a starting point projecting from a side reference face; and extensions extending from the starting point in multiple directions in plan view and having a projecting height decreasing from the starting point towards extension tips.

Preferably, the tire has, on an external surface of the sidewall portion, a mark that has: a projection projecting from a side reference face which is a smoothly extending part of the external surface of the sidewall portion; and a depression depressed from the side reference face.

Preferably, the tire has a projection including one or more marks on the sidewall portion.

### ADVANTAGEOUS EFFECTS OF INVENTION

The tire according to the present invention includes a sidewall portion including a thermoplastic elastomer composition having a specific heat capacity of 1.7 J/(g-K) or less, and has a depression and/or projection with a depth or height of 0.2 to 3.0 mm between the tread ground contact edge and the tire maximum width position of the sidewall portion. Thus, the present invention provides a tire having excellent durability during high speed running.

### BRIEF DESCRIPTION OF DRAWINGS

Fig. 1 illustrates a meridional cross-sectional view of an exemplary pneumatic tire 1 in a normal state according to an embodiment of the present invention.
Fig. 2 illustrates an exemplary schematic view of a side face of a tire 1.
Fig. 3 illustrates an enlarged perspective view of a part of the side face shown in Fig. 2.
Fig. 4 illustrates a cross-sectional view of the dimple shown in Fig. 3.
Fig. 5 illustrates a cross-sectional view of a part of a tire according to another embodiment.
Fig. 6 illustrates an exemplary schematic view of a side face of a tire 1.
Fig. 7(a) illustrates a plan view of a star-shaped pattern, and Fig. 7(b) illustrates a cross-sectional view of an extension.
Fig. 8(a) illustrates a perspective view of a star-shaped pattern, and Fig. 8(b) illustrates a side view of the star-shaped pattern.
Fig. 9 illustrates an exemplary schematic view of a side face of a tire 1.
Fig. 10 illustrates a partial cross-sectional perspective view of a part near a mark in the tire 1.
Fig. 11 illustrates an exemplary schematic view of a side face of a tire 1.
Fig. 12 illustrates an enlarged partial perspective view of a mark.
Fig. 13(a) illustrates a front view of a mark, and Fig. 13(b) illustrates an A-A cross-sectional view of the mark.

### DESCRIPTION OF EMBODIMENTS

The tire of the present invention includes a sidewall portion including a thermoplastic elastomer composition having a specific heat capacity of 1.7 J/(g-K) or less, and has a depression and/or projection with a depth or height of 0.2 to 3.0 mm between the tread ground contact edge and the tire maximum width position of the sidewall portion. Such a tire has excellent durability during high speed running.

The mechanism of this advantageous effect is not clear but is believed to be as follows.

Unlike rubber compositions, thermoplastic elastomers do not have chemical bonds and therefore become more flowable as the temperature increases. If such materials are used in sidewall portions of tires, the tires may be gradually deformed and damaged due to the heat generated during running or other factors. To overcome this problem, a thermoplastic elastomer composition is adjusted to have a specific heat capacity of 1.7 J/(g-K) or less to facilitate release of the heat built up in the tire; in addition, a 0.2 to 3.0 mm depression and/or projection is provided on the tire surface between the tread ground contact edge and the maximum sidewall width, where deformation may concentrate, to increase the surface area and also to cause turbulence on the surface of the sidewall portion. Thus, the heat build-up is reduced and the deformation of the sidewall portion is reduced. Because of this mechanism of action, it is believed that durability during high speed running is improved.

Thus, the problem (purpose) of imparting excellent durability during high speed running is solved by formulating a tire including a thermoplastic elastomer composition having a specific heat capacity of 1.7 J/(g-K) or less. In other words, the formulation of a specific heat capacity of 1.7 J/(g·K) or less does not define the problem (purpose), and the problem herein is to impart excellent durability during high speed running. In order to solve this problem, the tire has been formulated to satisfy the above parameter.

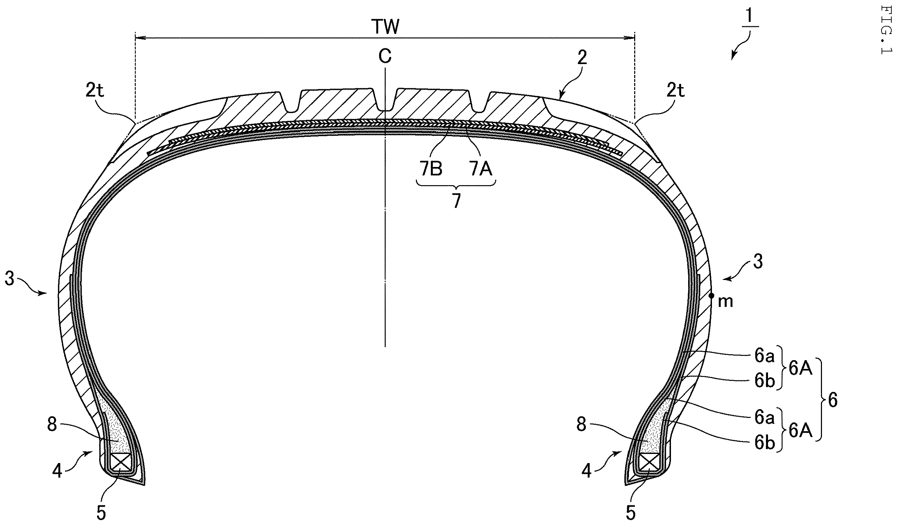

Embodiments of the present invention will be described below with reference to the drawings. Needless to say, the present invention is not limited to the following embodiments and includes other embodiments satisfying claim 1 of the present application. For example, the following describes an exemplary tire shown in Fig. 1 which includes a carcass extending from a tread portion to a bead core of a bead portion via a sidewall portion, and a belt layer located on the tread portion and outwardly of the carcass with respect to the tire radial direction. However, the tire of the present invention may be, for example, a tire that achieves the same effect by using a thermoplastic elastomer and other materials without including components such as a bead core, a carcass, and a belt layer.

Fig. 1 illustrates a meridional cross-sectional view of a pneumatic tire 1 in a normal state according to the present embodiment.

As shown in Fig. 1, the tire 1 according to the present embodiment can be suitably used as a radial tire for passenger vehicles, for example.

For example, the tire 1 according to the present embodiment may include a carcass 6 extending from a tread portion 2 to a bead core 5 of a bead portion 4 via a sidewall portion 3, and a belt layer 7 located on the tread portion 2 and outwardly of the carcass 6 with respect to the tire radial direction, as shown in Fig. 1.

In the tire 1 including a carcass 6, for example, the carcass 6 may include at least one, in the present embodiment two carcass plies 6A and 6B, as shown in Fig. 1. In the carcass plies 6A and 6B, carcass cords (not shown) are arranged at an angle of, for example, 75° to 90° relative to the tire circumferential direction. Examples of the carcass cords include organic fiber cords such as aromatic polyamide or rayon cords.

For example, the carcass plies 6A and 6B in the present embodiment may each have a body portion 6a which extends from the tread portion 2 to the bead core 5 of the bead portion 4 via the sidewall portion 3, and a folded portion 6b which is connected to the body portion 6a and is folded around the bead core 5 from the inside to the outside in the tire axial direction, as shown in Fig. 1. The tire may include, between the body portion 6a and the folded portion 6b of the carcass plies 6A and 6B, a bead apex rubber 8 extending outwardly from the bead core 5 with respect to the tire radial direction.

In the tire 1 including a belt layer 7, for example, the belt layer 7 may include at least one, in the present embodiment two belt plies 7A and 7B, as shown in Fig. 1. For example, the belt plies 7A and 7B may be formed of an inner belt ply 7A located on the carcass 6 side, and an outer belt ply 7B located outwardly of the inner belt ply 7A with respect to the tire radial direction.

In the belt plies 7A and 7B, belt cords (not shown) may be arranged at an angle of preferably 10° to 35° relative to the tire circumferential direction. The inner and outer belt plies 7A and 7B in the present embodiment may be stacked in such an orientation that the belt cords of one cross the belt cords of the other.

The belt cords may include, for example, steel, aromatic polyamide, or rayon cords. Although the belt layer 7 in the present embodiment includes two belt plies 7A and 7B, it may include three or more belt plies. In this case, the outer belt ply 7B corresponds to the belt ply that is outermost with respect to the tire radial direction among the belt plies.

The tire 1 is provided with a depression and/or projection (not shown) between the tread ground contact edge 2t and the tire maximum width position m of the sidewall portion 3. The term "tread ground contact edge" 2t refers to the edge of the contact patch that is outermost with respect to the tire axial direction (the axially outermost tread ground contact edge) determined when a normal load is applied to the tire 1 in a normal state and contacted with a plane at a camber angle of 0 degrees. The position axially centered between the tread ground contact edges 2t is defined as "tire equator" C, and the axial distance between the tread ground contact edges 2t is defined as "tread width" TW. The term "tire maximum width position of the sidewall portion" refers to the tire maximum width position m that projects most outwardly in the tire axial direction, except for projections such as letters and rim protectors provided on the sidewall portion 3.

The term "normal state" refers to a state where the tire 1 is mounted on a normal rim (not shown) and adjusted to a normal internal pressure and under no load. Herein, the dimensions of the components of the tire 1 are determined in such a normal state, unless otherwise stated. Moreover, the widths of the grooves are measured in a direction orthogonal to the longitudinal direction of the grooves, unless otherwise stated.

The term "normal rim" refers to a rim specified for each tire by the standards in a standard system including standards according to which the tire 1 is provided, and may be, for example, "standard rim" in JATMA, "design rim" in TRA, or "measuring rim" in ETRTO.

The term "normal internal pressure" refers to an air pressure specified for each tire by the standards in a standard system including standards according to which the tire 1 is provided, and may be "maximum air pressure" in JATMA, a maximum value shown in Table "TIRE LOAD LIMITS AT VARIOUS COLD INFLATION PRESSURES" in TRA, or "inflation pressure" in ETRTO. When the tire 1 is a passenger vehicle tire, the normal internal pressure is 180 kPa.

The term "normal load" refers to a load specified for each tire by the standards in a standard system including standards according to which the tire 1 is provided, and may be "maximum load capacity" in JATMA, a maximum value shown in Table "TIRE LOAD LIMITS AT VARIOUS COLD INFLATION PRESSURES" in TRA, or "load capacity" in ETRTO.

The tire surface is provided with a depression and/or projection (not shown) between the tread ground contact edge 2t and the tire maximum width position m of the sidewall portion 3. The projection and depression may be any portion having a projecting shape and any portion having a depressed shape, respectively. Examples include protrusions (e.g., fins), dimples, and local depressions or projections formed of ribs which display letters, figures, symbols, etc. for decoration, information, and other purposes (e.g., markings, size indications, etc. on the sidewall portion of a tire).

When a protrusion is formed on the tire surface, the protrusion corresponds to the projection. When a dimple is formed on the tire surface, the dimple corresponds to the depression. The depression and/or projection may be provided entirely or partially between the tread ground contact edge 2t and the tire maximum width position m of the sidewall portion 3.

The depth of the depression and/or the height of the projection are each at least 0.2 mm but not more than 3.0 mm. The depth and height are each preferably 0.3 mm or more, more preferably 0.4 mm or more, still more preferably 0.5 mm or more, but are each preferably 2.5 mm or less, more preferably 2.0 mm or less, still more preferably 1.5 mm or less, particularly preferably 1.0 mm or less. Herein, the depth of the depression refers to the maximum depth of each depression (e.g., each dimple), and the height of the projection refers to the maximum height of each projection (e.g., each protrusion).

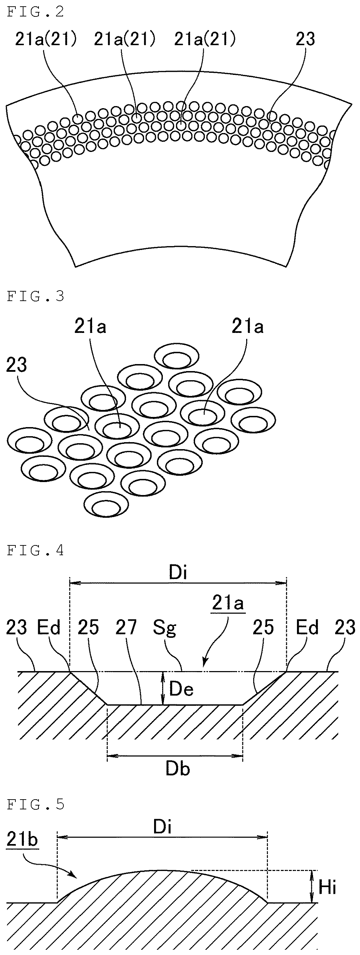

Fig. 2 illustrates an exemplary schematic view of a side face of a tire 1. Fig. 3 illustrates an enlarged perspective view of a part of the side face shown in Fig. 2. As shown in Figs. 2 and 3, depressions 21 are formed of a large number of dimples 21a on the side face. Each dimple 21a has a circular surface shape.

Fig. 4 illustrates a cross-sectional view of the dimple 21a shown in Fig. 3. The cross section shown in Fig. 4 passes through the center of the dimple 21a along a plane perpendicular to the radial direction of the tire 1. As shown in Fig. 4, the dimple 21a is depressed. The region other than the dimples 21a on the side face constitutes a side reference face 23.

The dimples 21a each have a slope face 25 and a bottom face 27. The slope face 25 has a ring shape. The bottom face 27 is continuous with the slope face 25. The bottom face 27 has a circular shape.

The two-dot chain line Sg in Fig. 4 is a line segment drawn from one edge Ed to the other edge Ed of the dimple 21a. In Fig. 4, the arrow Di indicates the length of the line segment Sg or the diameter of the dimple 21a. The diameter Di is preferably at least 2 mm but not more than 70 mm. The diameter Di is more preferably 4 mm or more, still more preferably 5 mm or more. The diameter Di is more preferably 50 mm or less, still more preferably 40 mm or less. When the dimple is a non-circular dimple, it is assumed as a circular dimple having the same area as that of the non-circular dimple. Then, the diameter of the circular dimple is defined as the diameter Di of the non-circular dimple. The tire 1 may have two or more types of dimples 21a having different diameters Di from each other.

In Fig. 4, the arrow De indicates the depth of the dimple 21a. The depth De is the distance between the deepest point of the dimple 21a and the line segment Sg. The depth De is at least 0.2 mm but not more than 3.0 mm. The depth De is preferably 0.3 mm or more, more preferably 0.4 mm or more, still more preferably 0.5 mm or more. The depth De is preferably 2.5 mm or less, more preferably 2.0 mm or less, still more preferably 1.5 mm or less, particularly preferably 1.0 mm or less. The tire 1 may have two or more types of dimples 21a having different depths De from each other.

The volume of each dimple 21a is at least 1.0 mm³ but not more than 400 mm³. The volume is more preferably 1.5 mm³ or more, still more preferably 2.0 mm³ or more. The volume is more preferably 300 mm³ or less, still more preferably 250 mm³ or less.

The total volume of all the dimples 21a is preferably at least 300 mm³ but not more than 5000000 mm³. The total volume is more preferably 600 mm³ or more, still more preferably 800 mm³ or more. The volume is more preferably 1000000 mm³ or less, still more preferably 500000 mm³ or less.

The tire 1 may have non-circular dimples instead of or in addition to the circular dimples 21a. The planar shape of the non-circular dimples is typically polygonal. The tire 1 may have dimples whose planar shape is elliptical or oval. The tire 1 may have dimples whose planar shape is a tear drop shape (tear drop type). Projection and depression patterns may be formed of pimples, grooves, or threads.

In Fig. 4, the arrow Db indicates the diameter of the bottom face 27. The ratio of the diameter Db to the diameter Di (Db/Di) is preferably at least 0.40 but not higher than 0.95. The ratio (Db/Di) is more preferably 0.55 or higher, still more preferably 0.65 or higher. The ratio (Db/Di) is more preferably 0.85 or lower, still more preferably 0.80 or lower.

Fig. 5 illustrates a cross-sectional view of a part of a tire according to another embodiment. The tire has a large number of pimples 21b. Fig. 5 shows the vicinity of the pimple 21b. The pattern of the pimples 21b is similar to the pattern of the dimples 21a shown in Fig. 2.

The pimples 21b each have a circular planar shape. The pimples 21b each have a circular arc cross-sectional shape. In other words, the pimples 21b are each a part of a sphere. In Fig. 5, the arrow Hi indicates the height of the pimple 21b. The height Hi is the height at the highest point of the pimple 21b. The height Hi of the pimple 21b is at least 0.2 mm but not more than 3.0 mm. The height Hi is preferably 0.3 mm or more, more preferably 0.4 mm or more, still more preferably 0.5 mm or more. The height Hi is preferably 2.5 mm or less, more preferably 2.0 mm or less, still more preferably 1.5 mm or less, particularly preferably 1.0 mm or less.

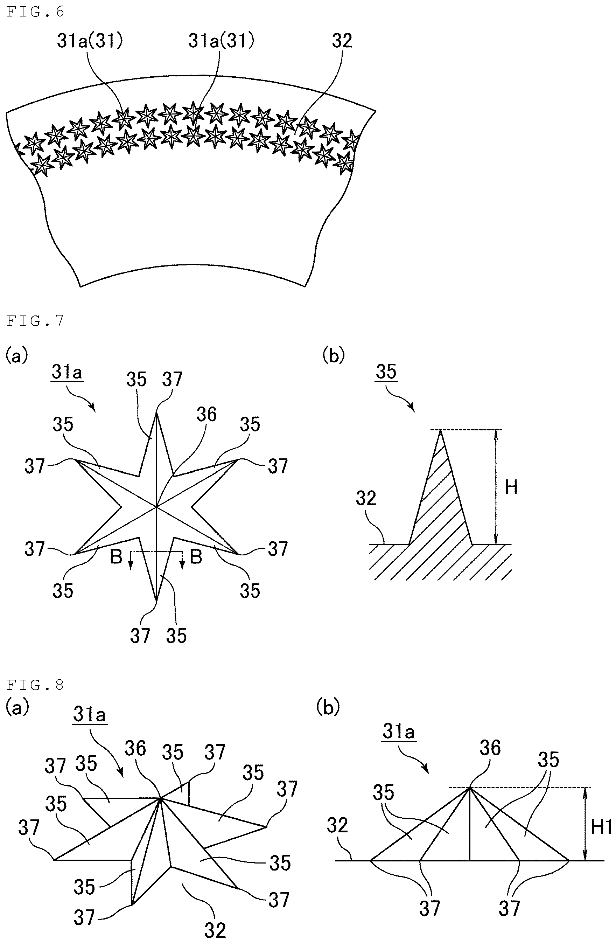

Fig. 6 illustrates an exemplary schematic view of a side face of a tire 1. The schematic view shown in Fig. 6 illustrates a side face of a tire 1 which has, on the external surface of a sidewall portion, a projection that has: a starting point projecting from a side reference face; and extensions extending from the starting point in multiple directions in plan view and having a projecting height decreasing from the starting point towards the extension tips. An example of such a tire may be a tire which has a pattern region including a side reference face and provided on the external surface of the sidewall portion, and a plurality of unit patterns each of which has: a starting point projecting from the side reference face; and extensions extending from the starting point in multiple directions in plan view and having a projecting height decreasing from the starting point towards the extension tips.

As shown in Fig. 7, projections 31 are formed of a large number of star-shaped patterns 31a (projections) on the side face. As shown in Fig. 6, the side face has a side reference face 32. The side reference face 32 forms a bottom face of the projections. The star-shaped patterns 31a as unit patterns are provide projecting from the side reference face 32.

As shown in Fig. 7(a), the star-shaped pattern 31a has a starting point 36 at the center thereof. As shown in Fig. 7(b) (Fig. 8(b)), the starting point 36 is provided so that the projecting height H1 from the side reference face 32 is at least 0.2 mm but not more than 3.0 mm. The height H1 refers to the height from the side reference face 32 to the highest point of the star-shaped pattern 31a (projection). The height H1 is preferably 0.3 mm or more, more preferably 0.4 mm or more, still more preferably 0.5 mm or more. The projecting height H1 is preferably 2.5 mm or less, more preferably 2.0 mm or less, still more preferably 1.5 mm or less, particularly preferably 1.0 mm or less. Six extensions 35 extend in a radial fashion from the starting point 36 to form a single protrusion (star-shaped pattern 31a). The six extensions 35 are connected with each other at the starting point 36.

As shown in Figs. 8(a) and 8(b), the extensions 35 have a projecting height H gradually decreasing from the starting point 36 towards the extension tips 37. The extension tips 37 are located on the side reference face 32. Thus, the extensions 35 are each provided to have a triangular shape in side view.

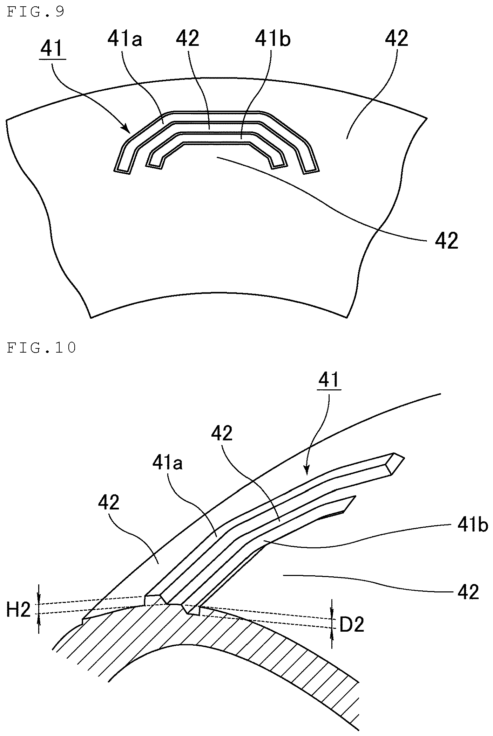

Fig. 9 illustrates an exemplary schematic view of a side face of a tire 1. The schematic view shown in Fig. 9 illustrates a side face of a tire 1 which has, on the external surface of a sidewall portion, a mark that has: a projection projecting from a side reference face which is a smoothly extending part of the external surface of the sidewall portion; and a depression depressed from the side reference face.

The tire 1 of Fig. 9 has a three-dimensional mark 41 on the external surface of a sidewall portion. Fig. 10 illustrates a partial cross-sectional perspective view of a part near the mark 41 on the tire 1 shown in Fig. 9. The mark 41 is provided to display a letter, a figure, or a symbol in a plan view of the mark 41 as shown in Fig. 9.

The mark 41 has a projection 41a projecting from a side reference face 42 and a depression 41b depressed from the side reference face 42. The side reference face 42 refers to a smoothly extending part of the external sidewall surface, excluding standard indications (not shown), the mark 41, and local projections and depressions.

In the example of Fig. 9, the mark 41 is provided to display a certain figure in a plan view of the mark 41. Specifically, the projection 41a is provided as a projecting strip extending substantially in the shape of the letter C, and the opening of the letter C faces to the inner circumference of the tire. The depression 41b is provided as a depressed strip extending substantially in the shape of the letter C along the projection 41a while keeping a substantially constant distance from the projection 41a on the tire inner circumference side of the projection 41a.

The surface of the projection 41a may be partially depressed to an extent that does not reach the side reference face 42 as long as the entire projection 41a projects from the side reference face 42. The surface of the depression 41b may partially project to an extent that does not reach the side reference face 42 as long as the entire depression 41b is depressed from the side reference face 42.

In Fig. 10, the arrow H2 indicates the height of the projection 41a, and the arrow D2 indicates the depth of the depression 41b. The height H2 refers to the height from the side reference face 42 to the highest point of the projection 41a. The depth D2 refers to the depth from the side reference face 42 to the deepest point of the depression 41b. The height H2 and/or the depth D2 are each at least 0.2 mm but not more than 3.0 mm. The depth De is preferably 0.3 mm or more, more preferably 0.4 mm or more, still more preferably 0.5 mm or more. The height H2 and/or the depth D2 are each preferably 2.5 mm or less, more preferably 2.0 mm or less, still more preferably 1.5 mm or less, particularly preferably 1.0 mm or less.

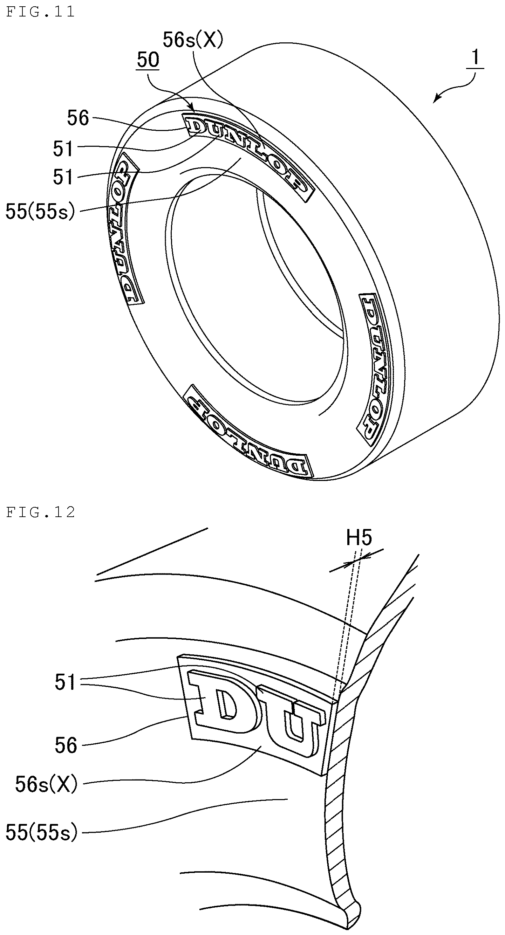

Fig. 11 illustrates an exemplary schematic view of a side face of a tire 1. The schematic view shown in Fig. 11 illustrates a side face of a tire 1 which has a projection including one or more marks on a sidewall portion. An example of such a tire may be a tire in which a mark indication with one or more marks is provided on a sidewall portion, and the mark indication includes a reference face provided on the surface of the sidewall portion, and the marks provided on the reference face.

As shown in Fig. 11, one or more mark indications 50 are located on at least one sidewall portion 55 in the tire 1. Each mark indication 50 includes a reference face X provided on the surface 55s of the sidewall portion 55, and one or more marks 51 (projections) provided on the reference face X. The mark indication 50 in this example includes a pedestal 56 projecting stepwise at a constant height H5 from the surface 55s of the sidewall portion 55. The surface 56s of the pedestal 56 forms the reference face X.

The marks 51 are letters, symbols, figures, or other marks to display the manufacturer name, brand name, size, or other information of the tire. This example shows a case where a brand name formed of a plurality of marks 51 is provided on the reference face X.

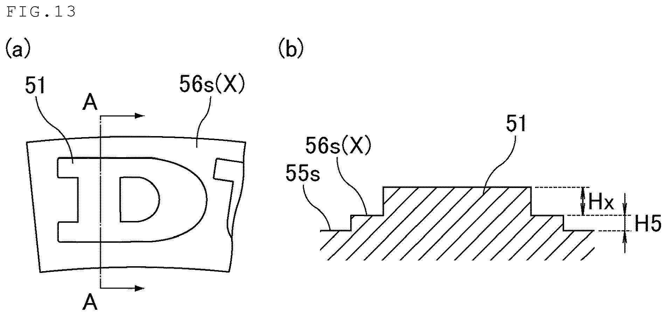

Fig. 12 illustrates an enlarged partial perspective view of the marks 51. Fig. 13(a) illustrates a front view of the mark, and Fig. 31(b) illustrates an A-A cross-sectional view thereof. In the embodiment of the tire in Figs. 11 to 13, the height Hx of the projection (mark 51) refers to the height from the reference face X to the highest point of the mark 51. The height Hx is at least 0.2 mm but not more than 3.0 mm. The height Hx is preferably 0.3 mm or more, more preferably 0.4 mm or more, still more preferably 0.5 mm or more. The height Hx is preferably 2.5 mm or less, more preferably 2.0 mm or less, still more preferably 1.5 mm or less, particularly preferably 1.0 mm or less.

The sidewall portion 3 of the tire 1 includes a thermoplastic elastomer composition having a specific heat capacity of 1.7 J/(g·K) or less. The thermoplastic elastomer composition used may be any thermoplastic elastomer composition that contains one or more thermoplastic elastomers and has a specific heat capacity of 1.7 J/(g·K) or less.

The thermoplastic elastomer composition has a specific heat capacity of 1.7 J/(g·K) or less. From the standpoint of durability during high speed running, the specific heat capacity is preferably 1.5 J/(g·K) or less, more preferably 1.4 J/(g-K) or less, still more preferably 1.3 J/(g·K) or less, particularly preferably 1.2 J/(g·K) or less, most preferably 1.0 J/(g·K) or less. The lower limit is not limited, and a smaller specific heat capacity is more desirable.

The specific heat capacity can be measured at a temperature of 25°C in accordance with JIS K 7123:2012, specifically as described later in Examples.

Examples of the method for reducing the specific heat capacity of the thermoplastic elastomer composition include (a) a method of controlling the weight average molecular weight Mw of a thermoplastic elastomer, (b) a method of selecting a material having a small specific heat capacity as a thermoplastic elastomer, (c) a method of controlling the type and amount of filler, and other methods, which may be used alone or in combination.

Examples of the thermoplastic elastomers included in the thermoplastic elastomer composition include thermoplastic polyurethane elastomers, thermoplastic polyester elastomers, thermoplastic olefin elastomers, thermoplastic vinyl chloride elastomers, thermoplastic polyamide elastomers, and thermoplastic fluorinated elastomers. From the standpoint of durability during high speed running, thermoplastic polyurethane elastomers or thermoplastic polyamide elastomers are preferred among these.

The amount of thermoplastic elastomers based on 100% by mass of the elastomer components in the thermoplastic elastomer composition is preferably 20% by mass or more, more preferably 40% by mass or more, still more preferably 50% by mass or more. The upper limit is not limited and may be 100% by mass, but from the standpoint of the physical properties of the composition, it may be 95% by mass or less, 90% by mass or less, or 85% by mass or less. When the amount is within the range indicated above, good durability during high speed running tends to be obtained.

The weight average molecular weight (Mw) of the thermoplastic elastomers is preferably 50,000 or more, more preferably 70,000 or more, still more preferably 80,000 or more, particularly preferably 100,000 or more. The Mw is also preferably 600,000 or less, more preferably 500,000 or less, still more preferably 450,000 or less, particularly preferably 300,000 or less, most preferably 200,000 or less. When the Mw is within the range indicated above, good durability during high speed running tends to be obtained.

Herein, the Mw is determined by gel permeation chromatography (GPC) calibrated with polystyrene standards.

Examples of thermoplastic polyurethane elastomers (TPU) include materials in which at least a polyurethane is physically aggregated to form quasi-crosslinks, thereby constituting a hard segment; and another polymer constitutes a non-crystalline soft segment with a low grass transition temperature. From the standpoint of durability during high speed running, thermoplastic polyester polyurethane elastomers in which polyester polyols are used as polyols, or thermoplastic polyether polyurethane elastomers in which polyether polyols are used as polyols are preferred among these.

For example, a high molecular weight diol compound such as polyethylene glycol, polypropylene glycol, polytetramethylene ether glycol, poly(butylene adipate)diol, poly-ε-caprolactone diol, or poly(hexamethylene carbonate)diol, and a diisocyanate compound such as 1,2-ethylene diisocyanate, 1,3-propylene diisocyanate, 1,4-butane diisocyanate, 1,6-hexamethylene diisocyanate, 1,4-cyclohexane diisocyanate, 4,4-cyclohexane diisocyanate, 4,4'-diphenylmethane diisocyanate, or tolylene diisocyanate may be used in the soft segment of the thermoplastic polyurethane elastomer.

A low molecular weight diol compound such as ethylene glycol, propylene glycol, trimethylene glycol, 1,4-butanediol, 1,3-butanediol, 1,5-pentanediol, 1,6-hexanediol, 1,7-heptane diol, 1,8-octane diol, 1,9-nonanediol, 1,10-decanediol, cyclopentane-1,2-diol, cyclohexane-1,2-diol, cyclohexane-1,3-diol, cyclohexane-1,4-diol, cyclohexane-1,4-dimethanol, hydroquinone, resorcin, chlorohydroquinone, bromohydroquinone, methylhydroquinone, phenylhydroquinone, methoxyhydroquinone, phenoxyhydroquinone, 4,4'-dihydroxybiphenyl, 4,4'-dihydroxydiphenyl ether, 4,4'-dihydroxydiphenyl sulfide, 4,4'-dihydroxydiphenyl sulfone, 4,4'-dihydroxybenzophenone, 4,4'-dihydroxydiphenylmethane, bisphenol A, 1,1-di(4-hydroxyphenyl)cyclohexane, 1,2-bis(4-hydroxyphenoxy)ethane, 1,4-dihydroxynaphthalene, or 2,6-dihydroxynaphthalene, and a diisocyanate compound such as 1,2-ethylene diisocyanate, 1,3-propylene diisocyanate, 1,4-butane diisocyanate, 1,6-hexamethylene diisocyanate, 1,4-cyclohexane diisocyanate, 4,4-cyclohexane diisocyanate, 4,4'-diphenylmethane diisocyanate, or tolylene diisocyanate may be used in the hard segment of the thermoplastic polyurethane elastomer.

A thermoplastic polyurethane elastomer may be synthesized by copolymerizing a polymer forming a hard segment with a polymer forming a soft segment by a known method. Commercially available thermoplastic polyurethane elastomers may be used such as "Elastollan" series available from BASF, "Kuramiron U" series available from Kuraray Co., Ltd., and "Miractran" series available from Nippon Miractran Company Limited.

The amount of thermoplastic polyurethane elastomers based on 100% by mass of the elastomer components in the thermoplastic elastomer composition is preferably 20% by mass or more, more preferably 40% by mass or more, still more preferably 50% by mass or more. The upper limit is not limited and may be 100% by mass, but from the standpoint of the physical properties of the composition, it may be 95% by mass or less, 90% by mass or less, or 85% by mass or less. When the amount is within the range indicated above, good durability during high speed running tends to be obtained.

Examples of thermoplastic polyamide elastomers (TPA) include thermoplastic resin materials which are elastic high molecular weight compounds formed of copolymers containing a polymer constituting a crystalline hard segment with a high melting point and a polymer constituting a non-crystalline soft segment with a low glass transition temperature, in which the backbone of the polymer constituting the hard segment has an amide bond (-CONH-).

Examples of thermoplastic polyamide elastomers include materials in which at least a polyamide constitutes a crystalline hard segment with a high melting point, and another polymer (e.g., polyester, polyether) constitutes a non-crystalline soft segment with a low grass transition temperature. In addition to the hard and soft segments, the thermoplastic polyamide elastomer may also contain a chain extender such as dicarboxylic acid.

Examples of the polyamide forming the hard segment of the thermoplastic polyamide elastomer include polycondensates of ω-aminocarboxylic acids or lactams, and co-condensation polymers of diamines and dicarboxylic acids. Examples of the ω-aminocarboxylic acids include 6-aminocaproic acid, 7-aminoheptanoic acid, 8-aminooctanoic acid, 10-aminocapric acid, 11-aminoundecanoic acid, and 12-aminododecanoic acid. Examples of the lactams include lauryllactam, ε-caprolactam, ω-enantholactam, and 2-pyrrolidone. Examples of the diamines include ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine, 3-methylpentamethylenediamine, and meta-xylenediamine. Examples of the dicarboxylic acids include oxalic acid, succinic acid, glutaric acid, adipic acid, pimelic acid, suberic acid, azelaic acid, sebacic acid, and dodecanedioic acid.

Examples of the polymer forming the soft segment of the thermoplastic polyamide elastomer include polyesters and polyethers such as polyethylene glycol, polypropylene glycol, polytetramethylene ether glycol, and ABA-type triblock polyethers.

Examples of combinations of the hard and soft segments of the thermoplastic polyamide elastomer include combinations of ring-opening polycondensates of lauryllactam with polyethylene glycol, combinations of ring-opening polycondensates of lauryllactam with polypropylene glycol, combinations of ring-opening polycondensates of lauryllactam with polytetramethylene ether glycol, and combinations of ring-opening polycondensates of lauryllactam with ABA-type triblock polyethers.

A thermoplastic polyamide elastomer may be synthesized by copolymerizing the polymer forming a hard segment with the polymer forming a soft segment by a known method. Commercially available thermoplastic polyamide elastomers may be used such as "UBESTA XPA" series available from Ube Industries, Ltd. and "VESTAMID" series available from Daicel-Evonik Ltd.

The amount of thermoplastic polyamide elastomers based on 100% by mass of the elastomer components in the thermoplastic elastomer composition is preferably 20% by mass or more, more preferably 40% by mass or more, still more preferably 50% by mass or more. The upper limit is not limited and may be 100% by mass, but from the standpoint of the physical properties of the composition, it may be 95% by mass or less, 90% by mass or less, or 85% by mass or less. When the amount is within the range indicated above, good durability during high speed running tends to be obtained.

The thermoplastic elastomer composition may contain additional elastomer components other than the above-described thermoplastic elastomers. Examples of such additional elastomer components include diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl rubbers and fluororubbers. These may be used alone or in combinations of two or more. Among the additional elastomers, SBR, BR, and isoprene-based rubbers are preferred because they are suitable in tire applications.

The diene rubbers may be either unmodified or modified diene rubbers.

The modified diene rubbers may be any diene rubber having a functional group interactive with filler such as silica. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

Any SBR may be used, including for example emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 10% by mass or higher, still more preferably 15% by mass or higher. The styrene content is also preferably 60% by mass or lower, more preferably 40% by mass or lower, still more preferably 30% by mass or lower. When the styrene content is within the range indicated above, the advantageous effect can be more suitably achieved.

Herein, the styrene content of the SBR is determined by ¹H-NMR analysis.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which functional groups as listed for the modified diene rubbers are introduced.

The amount of SBR, if present, based on 100% by mass of the elastomer components in the thermoplastic elastomer composition is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability during high speed running tends to be obtained.

Any BR may be used, including for example high-cis BR having a high cis content, BR containing syndiotactic polybutadiene crystals, and BR synthesized using rare earth catalysts (rare earth-catalyzed BR). These may be used alone or in combinations of two or more. In particular, high-cis BR having a cis content of 90% by mass or higher is preferred in order to improve abrasion resistance.

Moreover, the BR may be either unmodified or modified BR. Examples of the modified BR include those into which functional groups as listed for the modified diene rubbers are introduced.

The amount of BR, if present, based on 100% by mass of the elastomer components in the thermoplastic elastomer composition is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability during high speed running tends to be obtained.

The BR may be commercially available from, for example, Ube Industries, Ltd., JSR Corporation, Asahi Kasei Corporation, Zeon Corporation, etc.

Examples of isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of isoprene-based rubbers, if present, based on 100% by mass of the elastomer components in the thermoplastic elastomer composition is preferably 5% by mass or more, more preferably 10% by mass or more, still more preferably 20% by mass or more. The upper limit is preferably 80% by mass or less, more preferably 60% by mass or less, still more preferably 50% by mass or less. When the amount is within the range indicated above, good durability during high speed running tends to be obtained.

The thermoplastic elastomer composition may contain a filler. Any filler may be used, including materials known in the elastomer field such as silica, carbon black, calcium carbonate, talc, alumina, clay, aluminum hydroxide, aluminum oxide, and mica.

The amount of fillers (the total amount of fillers) per 100 parts by mass of the elastomer components in the thermoplastic elastomer composition is preferably 5 parts by mass or more, more preferably 8 parts by mass or more, still more preferably 10 parts by mass or more, particularly preferably 15 parts by mass or more, most preferably 20 parts by mass or more. Moreover, the upper limit is preferably 150 parts by mass or less, more preferably 100 parts by mass or less, still more preferably 50 parts by mass or less, particularly preferably 30 parts by mass or less, most preferably 25 parts by mass or less. When the amount is within the range indicated above, good durability during high speed running tends to be obtained.

Any carbon black may be used such as N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The amount of carbon black per 100 parts by mass of the elastomer components is preferably 5 parts by mass or more, more preferably 10 parts by mass or more, still more preferably 12 parts by mass or more, particularly preferably 15 parts by mass or more, most preferably 20 parts by mass or more. The amount is also preferably 100 parts by mass or less, more preferably 50 parts by mass or less, still more preferably 30 parts by mass or less, most preferably 25 parts by mass or less. When the amount is within the range indicated above, good durability during high speed running tends to be obtained.

The nitrogen adsorption specific surface area (N₂SA) of the carbon black is preferably 10 m²/g or more, more preferably 20 m²/g or more, still more preferably 30 m²/g or more. The N₂SA is also preferably 200 m²/g or less, more preferably 150 m²/g or less, still more preferably 100 m²/g or less. When the N₂SA is within the range indicated above, good durability during high speed running tends to be obtained.

The nitrogen adsorption specific surface area of the carbon black can be determined in accordance with JIS K6217-2:2001.

Examples of silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more.

The amount of silica per 100 parts by mass of the elastomer components is preferably 5 parts by mass or more, more preferably 10 parts by mass or more, still more preferably 15 parts by mass or more, particularly preferably 20 parts by mass or more. The upper limit of the amount is not limited, but is preferably 100 parts by mass or less, more preferably 70 parts by mass or less, still more preferably 50 parts by mass or less. When the amount is within the range indicated above, good durability during high speed running tends to be obtained.

The nitrogen adsorption specific surface area (N₂SA) of the silica is preferably 50 m²/g or more, more preferably 80 m²/g or more, still more preferably 100 m²/g or more. Moreover, the upper limit of the N₂SA of the silica is not limited, but is preferably 350 m²/g or less, more preferably 300 m²/g or less, still more preferably 250 m²/g or less. When the N₂SA is within the range indicated above, good durability during high speed running tends to be obtained.

The N₂SA of the silica is measured by a BET method in accordance with ASTM D3037-93.

The thermoplastic elastomer composition containing silica preferably further contains a silane coupling agent.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica is preferably 3 parts by mass or more, more preferably 6 parts by mass or more. The amount is also preferably 20 parts by mass or less, more preferably 15 parts by mass or less. When the amount is within the range indicated above, good durability during high speed running tends to be obtained.

From the standpoint of durability during high speed running, the thermoplastic elastomer composition preferably contains a styrene-containing polymer (a polymer containing styrene as a structural unit). The styrene-containing polymer may be any polymer containing styrene as a structural unit. Suitable examples include block copolymers of styrene compounds and conjugated diene compounds, and hydrogenated products thereof, as well as those obtained by modification of the foregoing polymers with acidic compounds or the like such as maleic anhydride. Herein, styrene-containing polymers are excluded from the above-described thermoplastic elastomers.

Examples of styrene compounds that may be used to form the styrene-containing polymer include styrene, alkylstyrenes such as α-methylstyrene, p-methylstyrene, and p-t-butylstyrene, p-methoxystyrene, and vinylnaphthalene. Examples of conjugated diene compounds include butadiene, isoprene, piperylene, methylpentadiene, phenylbutadiene, 3,4-dimethyl-1,3-hexadiene, and 4,5-diethyl-1,3-octadiene. Each of these compounds may be used alone, or two or more of these may be used in combination.

Specific examples of the styrene-containing polymer include AB-type diblock styrene copolymers such as styrene-ethylene-butylene copolymers (SEB); ABA-type triblock styrene copolymers such as styrene-butadiene-styrene copolymers (SBS), hydrogenated SBS (styrene-ethylene-butylene-styrene copolymers (SEBS)), styrene-isoprene-styrene copolymers (SIS), hydrogenated SIS (styrene-ethylene-propylene-styrene copolymers (SEPS)), and styrene-isobutylene-styrene copolymers (SIBS); ABAB-type tetrablock styrene copolymers such as styrene-butadiene-styrene-butadiene copolymers (SBSB); ABABA-type pentablock styrene copolymers such as styrene-butadiene-styrene-butadiene-styrene copolymers (SBSBS); multiblock styrene copolymers having a larger number of AB repeating units; and hydrogenated products obtained by hydrogenating the ethylenic double bonds of styrene random copolymers such as styrene-butadiene rubbers (SBR).

Commercially available styrene-containing polymers may be used such as "Tuftec" series available from Asahi Kasei Corporation.

The amount of styrene-containing polymers per 100 parts by mass of the elastomer components in the thermoplastic elastomer composition is preferably 0.1 parts by mass or more, more preferably 0.5 parts by mass or more, still more preferably 1 part by mass or more. The upper limit is preferably 30 parts by mass or less, more preferably 20 parts by mass or less, still more preferably 15 parts by mass or less, particularly preferably 10 parts by mass or less. When the amount is within the range indicated above, good durability during high speed running tends to be obtained.

The thermoplastic elastomer composition may contain a plasticizer. The term "plasticizer" refers to a material which can impart plasticity to elastomer components, and examples include liquid plasticizers (plasticizers that are liquid at room temperature (25°C)) and resins (resins that are solid at room temperature (25°C)).

The amount of plasticizers (the total amount of plasticizers), if present, per 100 parts by mass of the rubber components in the thermoplastic elastomer composition is preferably 1 part by mass or more, more preferably 2 parts by mass or more, still more preferably 3 parts by mass or more. The upper limit is preferably 50 parts by mass or less, more preferably 30 parts by mass or less, still more preferably 20 parts by mass or less. When the amount is within the range indicated above, good durability during high speed running tends to be obtained.

Any liquid plasticizer (plasticizer that is liquid at room temperature (25°C)) may be used such as oils, liquid resins, and liquid diene polymers. These may be used alone or in combinations of two or more.

The amount of liquid plasticizers, if present, per 100 parts by mass of the rubber components in the thermoplastic elastomer composition is preferably 1 part by mass or more, more preferably 2 parts by mass or more, still more preferably 3 parts by mass or more. The upper limit is preferably 30 parts by mass or less, more preferably 20 parts by mass or less, still more preferably 15 parts by mass or less. When the amount is within the range indicated above, good durability during high speed running tends to be obtained.

Examples of oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., Japan Energy Corporation, Olisoy, H&R, Hokoku Corporation, Showa Shell Sekiyu K.K., Fuji Kosan Co., Ltd., The Nisshin Oillio Group, Ltd., etc. Process oils such as paraffinic process oils, aromatic process oils, and naphthenic process oils, or plant oils are preferred among these.

Examples of liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins, all of which are liquid at 25°C.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. The chain end or backbone of these polymers may be modified with a polar group.

Examples of the above-described resins (resins that are solid at room temperature (25°C)) other than the above-described styrene-containing polymers include coumarone-indene resins, terpene resins, p-t-butylphenol acetylene resins, and acrylic resins, all of which are solid at room temperature (25°C). These may be used alone or in combinations of two or more. The resins may also be hydrogenated.

The amount of the above-described resins per 100 parts by mass of the elastomer components in the thermoplastic elastomer composition is preferably 0.1 parts by mass or more, more preferably 0.5 parts by mass or more, still more preferably 1 part by mass or more. The upper limit is preferably 30 parts by mass or less, more preferably 20 parts by mass or less, still more preferably 15 parts by mass or less, particularly preferably 10 parts by mass or less. When the amount is within the range indicated above, good durability during high speed running tends to be obtained.

Examples of coumarone-indene resins include resins that contain coumarone and indene as monomer components forming the skeleton (backbone) of the resins. Examples of monomer components which may be contained in the skeleton in addition to coumarone and indene include styrene, α-methylstyrene, methylindene, and vinyltoluene.

Examples of terpene resins include polyterpene, terpene phenol, and aromatic modified terpene resins.

The term "polyterpene" refer to a resin produced by polymerizing a terpene compound, or a hydrogenated product of the resin. The term "terpene compound" refers to a hydrocarbon having a composition represented by (C₅H₈)ₙ, or an oxygen-containing derivative thereof, each of which has a terpene backbone and is classified as, for example, a monoterpene (C₁₀H₁₆), sesquiterpene (C₁₅H₂₄), or diterpene (C₂₀H₃₂) . Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include terpene resins made from the aforementioned terpene compounds, such as α-pinene resins, β-pinene resins, limonene resins, dipentene resins, and β-pinene-limonene resins, and hydrogenated terpene resins produced by hydrogenating these terpene resins. Examples of the terpene phenol resins include resins copolymerized from the aforementioned terpene compounds and phenolic compounds, and resins produced by hydrogenating these resins. Specific examples include resins produced by condensation of the aforementioned terpene compounds, phenolic compounds, and formaldehyde. Examples of the phenolic compounds include phenol, bisphenol A, cresol, and xylenol. Examples of the aromatic modified terpene resins include resins produced by modification of terpene resins with aromatic compounds, and resins produced by hydrogenating these resins. The aromatic compounds may be any compound having an aromatic ring, including, for example: phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes; coumarone; and indene.

Examples of p-t-butylphenol acetylene resins include resins produced by condensation of p-t-butylphenol and acetylene.

Any acrylic resin may be used, but solvent-free acrylic resins are suitable because they contain few impurities and provide a sharp molecular weight distribution.

Examples of the solvent-free acrylic resins include (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. In the present invention, the term "(meth)acrylic" means methacrylic and acrylic.

Preferred are acrylic resins which are substantially free of auxiliary raw materials such as polymerization initiators, chain transfer agents, and organic solvents. Also preferred are acrylic resins having a relatively narrow compositional distribution or molecular weight distribution, produced by continuous polymerization.

As described above, acrylic resins which are substantially free of auxiliary raw materials such as polymerization initiators, chain transfer agents, and organic solvents, namely those of high purity, are preferred. The purity of the acrylic resins (the resin content of the resins) is preferably 95% by mass or higher, more preferably 97% by mass or higher.

Examples of the monomer components of the acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives.

In addition to the (meth)acrylic acids or (meth)acrylic acid derivatives, aromatic vinyls, such as styrene, α-methylstyrene, vinyltoluene, vinylnaphthalene, divinylbenzene, trivinylbenzene, or divinylnaphthalene, may also be used as the monomer components of the acrylic resins.

The acrylic resins may be formed only of (meth)acrylic components or may further contain constituent components other than the (meth)acrylic components.

Moreover, the acrylic resins may contain a hydroxy group, a carboxyl group, a silanol group, or other group.

The plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Arakawa Chemical Industries, Ltd., Taoka Chemical Co., Ltd., etc.

From the standpoint of properties such as crack resistance and ozone resistance, the thermoplastic elastomer composition may contain an antioxidant.

Any antioxidant may be used, and examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine or quinoline antioxidants, with N-(1,3-dimethylbutyl)-N'-phenyl-p-phenylenediamine or polymerized 2,2,4-trimethyl-1,2-dihydroquinoline being more preferred. Usable commercial products are available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the elastomer components is preferably 0.2 parts by mass or more, more preferably 0.5 parts by mass or more. The amount is preferably 7.0 parts by mass or less, more preferably 4.0 parts by mass or less.

The thermoplastic elastomer composition may contain stearic acid. The amount of stearic acid per 100 parts by mass of the elastomer components is preferably 0.5 to at least 10 parts by mass, more preferably 0.5 to 5 parts by mass.

The stearic acid may be a conventional one. Usable commercial products are available from, for example, NOF Corporation, Kao Corporation, FUJIFILM Wako Pure Chemical Corporation, Chiba Fatty Acid Co., Ltd., etc.

The thermoplastic elastomer composition preferably contains zinc oxide. The amount of zinc oxide per 100 parts by mass of the elastomer components is preferably 0.5 to 10 parts by mass, more preferably 1 to 5 parts by mass.

The zinc oxide may be a conventional one. Usable commercial products are available from, for example, Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The thermoplastic elastomer composition may contain a wax. The amount of waxes per 100 parts by mass of the elastomer components is preferably 0.5 to 10 parts by mass, more preferably 1 to 5 parts by mass.

Any wax may be used such as petroleum waxes and natural waxes, as well as synthetic waxes produced by purifying or chemically treating a plurality of waxes. These waxes may be used alone or in combinations of two or more.

Examples of petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing waxes. Usable commercial products are available from, for example, Ouchi Shinko Chemical Industrial Co., Ltd., Nippon Seiro Co., Ltd., Seiko Chemical Co., Ltd., etc.

The thermoplastic elastomer composition may contain sulfur in order to moderately crosslink the polymer chains.

The amount of sulfur per 100 parts by mass of the elastomer components is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The thermoplastic elastomer composition may contain a vulcanization accelerator.

The amount of vulcanization accelerators is not limited and may be arbitrarily selected according to the desired cure rate or crosslink density. However, the amount per 100 parts by mass of the elastomer components is usually 0.3 to 10 parts by mass, preferably 0.5 to 7 parts by mass.

Any type of vulcanization accelerator may be used including usually used ones. Examples of such vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. From the standpoint of the balance between the above-mentioned properties, sulfenamide or guanidine vulcanization accelerators are preferred among these.

In addition to the above-mentioned components, the thermoplastic elastomer composition may contain any appropriate additive usually used in the application field, including release agents and pigments such as titanium oxide.

The thermoplastic elastomer composition may be prepared by known methods. For example, it may be prepared from components including a thermoplastic elastomer by known forming techniques such as injection molding. Moreover, it may be prepared, for example, by kneading components in a rubber kneading machine such as an open roll mill or a Banbury mixer, optionally followed by crosslinking. With regard to the kneading conditions, the kneading temperature is usually 50 to 200°C, preferably 80 to 190°C, and the kneading time is usually 30 seconds to 30 minutes, preferably 1 minute to 30 minutes.

The thermoplastic elastomer composition is suitable for use in a tire. Examples of the tire include pneumatic tires and non-pneumatic tires. Pneumatic tires are preferred among these. For example, summer tires and winter tires (studless winter tires, snow tires, studded tires, etc.) are suitable. The tire may be used as a tire for passenger vehicles, large passenger vehicles, large SUVs, heavy duty vehicles such as trucks and buses, light trucks, or motorcycles, or a racing tire (high performance tire), or other tire application.

The thermoplastic elastomer composition is preferably used in a passenger vehicle tire, among others.

The term "passenger vehicle tire" refers to a tire which is supposed to be mounted on a vehicle that runs on four wheels and which has a maximum load capacity of 1000 kg or less. The term "maximum load capacity" refers to a maximum load capacity specified for each tire by the standards in a standard system including standards according to which the tire is provided, and may be the maximum load capacity based on the load index (LI) in the Japan Automobile Tyre Manufacturers Association standard (JATMA standard), the maximum value shown in Table "TIRE LOAD LIMITS AT VARIOUS COLD INFLATION PRESSURES" in TRA, or the load capacity in ETRTO.

The tire can be produced from the thermoplastic elastomer composition by usual methods. For example, it may be produced from components including a thermoplastic elastomer by known forming techniques such as injection molding. Moreover, it may be produced by extruding the unvulcanized thermoplastic elastomer composition containing the components into the shape of a tire component, and forming it with other tire components on a tire building machine in a usual manner to build an unvulcanized tire, followed by heating and pressing the unvulcanized tire in a vulcanizer.

The present invention will be specifically described with reference to, but not limited to, examples.

The chemicals used are listed below.
TPU 1: Elastollan C60A10WN (thermoplastic polyester polyurethane elastomer, Mw: 300,000) available from BASF
TPU 2: Elastollan 1198ATR (thermoplastic polyether polyurethane elastomer, Mw: 100,000) available from BASF
TPA: UBESTA XPA 9035X (thermoplastic polyamide elastomer, Mw: 500,000) available from Ube Industries, Ltd.
Styrene-containing polymer: Tuftec M1913 (styrene-ethylene-butylene-styrene copolymer (SEBS)) available from Asahi Kasei Corporation
Carbon black: DIABLACK N550 (N₂SA: 42 m²/g) available from Mitsubishi Chemical Corporation
Silica: silica 115Gr (N₂SA: 110 m²/g) available from Rhodia Japan

### <Preparation of test sample>

The materials according to the formulation recipe shown in Table 1 or 2 were injection molded using a twin screw extruder into the shape (the specification 1 or 2 below) of a tire sidewall portion having an outer diameter of 260 mm, an inner diameter of 125 mm, and a thickness of 4 mm, thereby obtaining evaluation samples.

### (Surface specification 1 of sidewall portion)

- Dimples (depressions) as shown in Figs. 2 to 4 are disposed in the tire circumferential direction and between the tread ground contact edge and the tire maximum width position of the sidewall portion, with a width of 30 mm and an interval between the dimples of 2 mm or more.
- De (depth of dimple): shown in Table 1
- Di (length from one edge to the other edge of dimple): 5 mm

### (Surface specification 2 of sidewall portion)

- A brand name (projections) as shown in Figs. 11 to 13 is disposed in the tire circumferential direction and between the tread ground contact edge and the tire maximum width position of the sidewall portion, with a width of 30 mm and an interval between the marks of 2 mm or more (the marks are disposed in four locations on the circumference as shown in Fig. 11).
- Hx (height of mark): shown in Table 2

The durability during high speed running of the evaluation samples was evaluated as described below. Comparative Examples 1-1 and 2-1 are used as standards of comparison in Tables 1 and 2, respectively.

### (Measurement of specific heat capacity)

The specific heat capacity of the evaluation samples was calculated from the differential scanning calorimetry (DSC) data measured at a temperature of 25°C in accordance with JIS K 7123:2012 "Testing methods for specific heat capacity of plastics".

### (Durability during high speed running)

The evaluation samples were repeatedly compressed and deformed by 10% in the radial direction at 100 Hz at room temperature while blowing air. The time until the outer diameter in the repeated deformation direction decreased by 5% from before the test was determined and expressed as an index relative to that of the standard comparative example taken as 100. A higher index indicates better durability during high speed running.

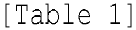

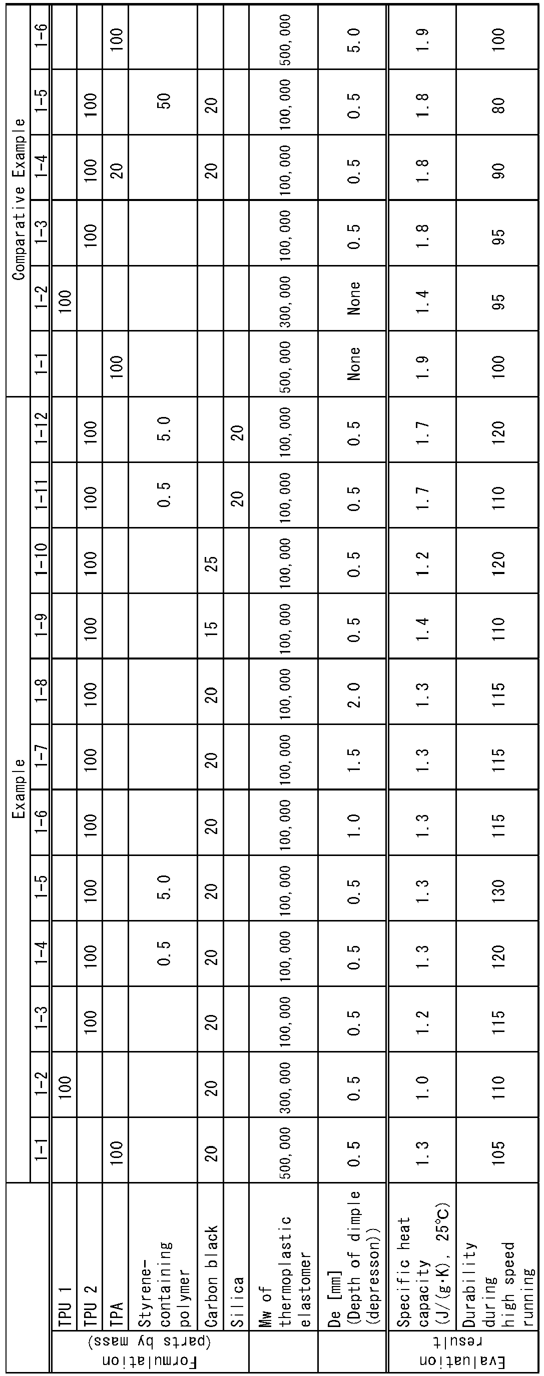

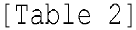

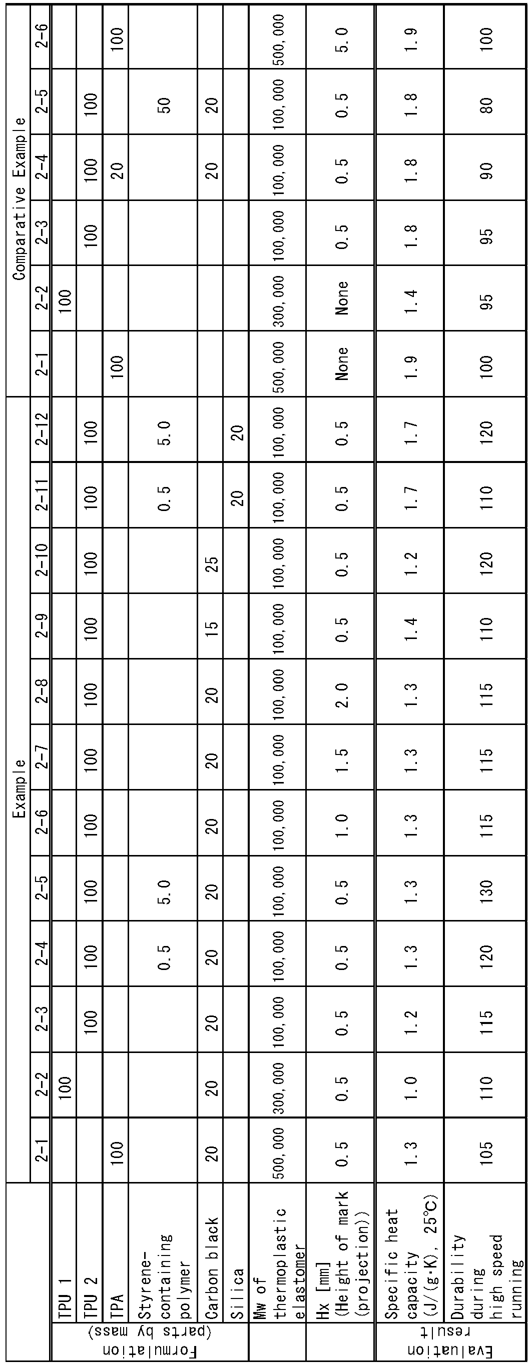

Tables 1 and 2 show that excellent durability during high speed running was exhibited by the tires of the examples which included a sidewall portion including a thermoplastic elastomer composition having a specific heat capacity of 1.7 J/(g·K) or less and which had a depression with a depth of 0.2 to 3.0 mm and/or a projection with a height of 0.2 to 3.0 mm between the tread ground contact edge and the tire maximum width position of the sidewall portion.

### REFERENCE SIGNS LIST

Pneumatic tire
2 tread portion
3 sidewall portion
4 bead portion
5 bead core
6 carcass
6A, 6B carcass ply
6a body portion
6b folded portion
7 belt layer
7A, 7B belt ply
8 bead apex rubber
21 depression, projection
21a dimple
21b pimple
23 side reference face
25 slope face
27 bottom face
2t tread ground contact edge
m tire maximum width position
C tire equator
TW tread width
Sg line segment drawn from one edge Ed to the other edge Ed of dimple
Di diameter of dimple
De depth of dimple
Db diameter of bottom face
Hi height of pimple
31a star-shaped pattern (projection)
31 projection and depression
32 side reference face
35 extension
36 starting point
37 extension tip
H1 projecting height
H cross-sectional height of extension
41 mark
41a projection
41b depression
42 side reference face
H2 height of projection 41a
D2 depth of depression 41b
55 sidewall portion
50 mark indication
51 mark
55s surface of sidewall portion 55
56 pedestal
56s surface of pedestal 56
X reference face
H5 constant height from surface 55s of sidewall portion 55
Hx height of projection (mark 51)

## Claims

1. A tire, comprising a sidewall portion comprising a thermoplastic elastomer composition having a specific heat capacity of 1.7 J/(g·K) or less,
the tire having at least one of a depression with a depth of 0.2 to 3.0 mm or a projection with a height of 0.2 to 3.0 mm between a tread ground contact edge and a tire maximum width position of the sidewall portion.

2. The tire according to claim 1,
wherein the thermoplastic elastomer composition comprises at least one thermoplastic polyurethane elastomer.

3. The tire according to claim 1 or 2,
wherein the thermoplastic elastomer composition comprises at least one thermoplastic elastomer having a weight average molecular weight of 50,000 to 200,000.

4. The tire according to any one of claims 1 to 3,
wherein the thermoplastic elastomer composition comprises at least one styrene-containing polymer.

5. The tire according to any one of claims 1 to 4,
wherein the thermoplastic elastomer composition has a styrene-containing polymer content of 1 to 20 parts by mass per 100 parts by mass of elastomer components.

6. The tire according to any one of claims 1 to 5,
wherein the depth or height is 0.3 to 2.0 mm.

7. The tire according to any one of claims 1 to 6,
wherein the thermoplastic elastomer composition has a specific heat capacity of 1.2 J/(g·K) or less.

8. The tire according to claim 2,
wherein the thermoplastic polyurethane elastomer comprises at least one selected from the group consisting of thermoplastic polyester polyurethane elastomers and thermoplastic polyether polyurethane elastomers.

9. The tire according to any one of claims 1 to 8,
wherein the thermoplastic elastomer composition has a filler content of 5 to 150 parts by mass per 100 parts by mass of elastomer components.

10. The tire according to any one of claims 1 to 9,
wherein the thermoplastic elastomer composition has a carbon black content of 5 to 100 parts by mass per 100 parts by mass of elastomer components.

11. The tire according to any one of claims 1 to 10,
wherein the thermoplastic elastomer composition has a silica content of 5 to 100 parts by mass per 100 parts by mass of elastomer components.

12. The tire according to any one of claims 1 to 11,
wherein the thermoplastic elastomer composition has a styrene-containing polymer content of 0.1 to 30 parts by mass per 100 parts by mass of elastomer components.

13. The tire according to any one of claims 1 to 12,
wherein the styrene-containing polymer comprises at least one selected from the group consisting of styrene-ethylene-butylene copolymers, styrene-butadiene-styrene copolymers, styrene-ethylene-butylene-styrene copolymers, styrene-isoprene-styrene copolymers, styrene-ethylene-propylene-styrene copolymers, styrene-isobutylene-styrene copolymers, styrene-butadiene-styrene-butadiene copolymers, and styrene-butadiene-styrene-butadiene-styrene copolymers.

14. The tire according to any one of claims 1 to 13,
wherein the styrene-containing polymer comprises at least one styrene-ethylene-butylene-styrene copolymer.

15. The tire according to any one of claims 1 to 14,
wherein the tire has, on an external surface of the sidewall portion, a projection that has: a starting point projecting from a side reference face; and extensions extending from the starting point in multiple directions in plan view and having a projecting height decreasing from the starting point towards extension tips.

16. The tire according to any one of claims 1 to 14,
wherein the tire has, on an external surface of the sidewall portion, a mark that has: a projection projecting from a side reference face which is a smoothly extending part of the external surface of the sidewall portion; and a depression depressed from the side reference face.

17. The tire according to any one of claims 1 to 14,
wherein the tire has a projection comprising one or more marks on the sidewall portion.
